(19) Europäisches Patentamt
European Patent Office
Office européen des brevets

(11) Veröffentlichungsnummer: **0 395 883 B1**

(12) # EUROPÄISCHE PATENTSCHRIFT

(45) Veröffentlichungstag der Patentschrift: **03.05.95**

(51) Int. Cl.[6]: **C08G 75/02**

(21) Anmeldenummer: **90105985.7**

(22) Anmeldetag: **29.03.90**

Die Akte enthält technische Angaben, die nach dem Eingang der Anmeldung eingereicht wurden und die nicht in dieser Patentschrift enthalten sind.

(54) **Mischungen aus Polyarylensulfiden mit Sulfonsäure und/oder Sulfonsäurederivat-Endgruppen und Polyarylensulfiden, und deren Verwendung.**

(30) Priorität: **11.04.89 DE 3911766**

(43) Veröffentlichungstag der Anmeldung:
**07.11.90 Patentblatt 90/45**

(45) Bekanntmachung des Hinweises auf die Patenterteilung:
**03.05.95 Patentblatt 95/18**

(84) Benannte Vertragsstaaten:
**BE DE FR GB IT**

(56) Entgegenhaltungen:
**EP-A- 0 053 344**
**EP-A- 0 164 638**
**EP-A- 0 164 639**
**GB-A- 1 056 226**

**CHEMICAL ABSTRACTS, Band 105, Nr. 26, 29. Dezember 1986, Seite 1,Zusammenfassung Nr. 227349f, Columbus, Ohio, US; V.A. SERGEEV et al.: "Reactivealpha-omega-oligoarylene sulfides", & DOKL. AKAD. NAUK SSSR 1986, 290(3), 634-7**

(73) Patentinhaber: **BAYER AG**

**D-51368 Leverkusen (DE)**

(72) Erfinder: **Dorf, Ernst-Ulrich, Dr.**
**Bodelschwinghstrasse 16**
**D-4150 Krefeld (DE)**
Erfinder: **Rüsseler, Wolfgang, Dr.**
**Waldhofstrasse 121**
**D-4150 Krefeld (DE)**
Erfinder: **Köhler, Burkhard, Dr.**
**Virneburgstrasse 9**
**D-4150 Krefeld (DE)**
Erfinder: **Ebert, Wolfgang, Dr.**
**Doeperhofstrasse 31**
**D-4150 Krefeld (DE)**
Erfinder: **Schmitt, Walter, Dipl.-Phys.**
**Am Konenbusch 5a**
**D-4040 Neuss 21 (DE)**

**EP 0 395 883 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mischungen aus Oligo- und Polyarylensulfiden, vorzugsweise Polyphenylensulfiden, mit Sulfonsäure- und/oder Sulfonsäurederivat-Endgruppen mit Polyarylensulfiden und deren Verwendung zur Herstellung geformter Körper,
Polyphenylensulfide mit funktionellen Gruppen sind bekannt [z. B. US-A 33 54 129, Intern. J. Polymeric Mater. 11 (1987) 263]. Weiterhin sind Phenylensulfid-Poly- bzw. Oligomere mit funktionellen Endgruppen wie Carboxyl, Nitril etc. (Telechele) bekannt [z.B. Polymer Bulletin 4 (1981) 459, FR-A 24 70 780, DE-A 34 21 608, DE-A 34 21 610].

Die Mischungen der Erfindung enthalten Oligo- und Polyarylensulfide, vorzugsweise Oligo- und Polyphenylensulfide der Formel (I)

$Y\text{-}(O)_mS\text{-}[Ar\text{-}S]_n\text{-}Ar\text{-}X$ (I) ,

in welcher

- Y für -OR, -OM oder $-NR_2$, wobei R die bei Formeln (II), (III) und (IV) angegebene Bedeutung hat, steht,
- n für eine ganze Zahl $\geq 2$, bevorzugt $\geq 2 \leq 100$,
- m für die Zahl 2,
- M für H, ein Alkalimetall, ein Erdalkalimetall • 1/2, ein Metall der Gruppe III • 1/3,
- X für Halogen-, Mercapto-, Mercaptid oder einen weiteren $-S(O)_m$-Y-Rest steht,
- Ar für gleiche oder verschiedene Reste der Formeln (II), (III) und/oder (IV) steht,

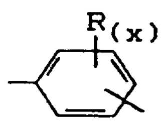

(II),

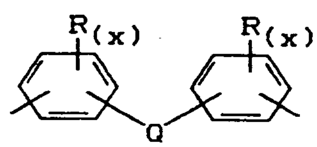

(III),

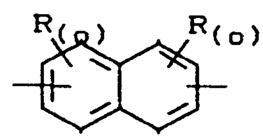

(IV),

in denen

- R gleich oder verschieden sind und Wasserstoff $C_1$-$C_{20}$-Alkyl, $C_4$-$C_{20}$-Cycloalkyl, $C_6$-$C_{24}$-Aryl, $C_7$-$C_{24}$-Arylalkyl sein können, wobei zwei zueinander ortho-ständige Reste R zu einem aromatischen oder heterocyclischen Ring mit N, O oder S als Heteroatomen verknüpft sein können,

und

- Q für eine Einfachbindung oder zweibindige Gruppen wie -$Ar^{1'}$-, -O-, -S-, -SO-, $-SO_2-$, $-(CR_2)_p-$, -CO-, -CO-$Ar^1$-CO- steht, wobei R die oben angegebene Bedeutung hat, $Ar^1$ einen zweibindigen $C_6$-$C_{24}$-Aromatenbedeutet und p eine ganze Zahl von 1 bis 24 darstellt, und
- x für die Zahl 1, 2, 3 oder 4 steht und
- o für die Zahl 1, 2 oder 3 steht.
- M steht vorzugsweise für ein Alkalimetall wie Na, K, ein Erdalkalimetall • 1/2 wie Mg, Ca, Ba oder ein Metall der 3. Hauptgruppe • 1/3 des Periodensystems der Elemente (Hollmann-Wiberg, Lehrbuch der Anorganischen Chemie, Walter de Gruyter & Co, 1964),
- X steht vorzugsweise für Halogen wie Cl, Br, eine -SH, $-S^{\ominus}M$-Gruppe, wobei M die obengenannte Bedeutung hat.

Es ist bekannt, stabilisierte Polyphenylensulfide herzustellen, in dem vorgebildete Polyphenylensulfide ($n \geq 20$) mit Monohalogenaromaten mit elektronenziehenden Substituenten wie -Halogen-, $-SO_2-$, -CO-, $-NO_2$, $-SO_3R$, -COOR umgesetzt werden (z.B. EP-A 53 344). Jedoch erhält man auf diese Weise keine Polymeren mit funktionellen und reaktiven Gruppen. Die erhaltenen Polymeren sind sehr stabil.

Die Oligo- und Polyarylensulfide, vorzugsweise Oligo- und Polyphenylensulfide der Formel (I) werden hergestellt in dem

a) eine oder mehrere Dihalogen(hetero)aromaten der Formeln (V), (VI) und/oder (VII),

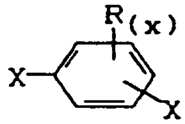

(V),

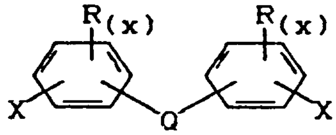

(VI),

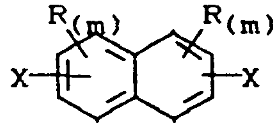

(VII),

in denen

- X für Halogen wie Chlor oder Brom steht,
- R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder heterocyclischen Ring mit N, O oder S als Heteroatomen verknüpft sein können, und
- Q für eine Einfachbindung oder zweibindige Gruppen wie -Ar-, -O-, -S-, -SO-, -$SO_2$-, -$(CH_2)_p$-, -CO-, -CO-Ar-CO-, -CO-NH-, -CO-NH-Ar-NH-CO-steht, wobei R die oben angegebene Bedeutung hat, Ar einen zweibindigen $C_6$-$C_{24}$-Aromaten bedeutet und p eine ganze Zahl von 1 bis 24 darstellt, und
- x für die Zahl 1, 2, 3 oder 4 steht,
- m für die Zahl 1, 2 oder 3 steht

und

b) 0,5 bis 25 Mol-%, bevorzugt 1 bis 10 Mol-%, bezogen auf die Summe der Dihalogenaromaten der Formeln (V), (VI) und/oder (VII) einer Verbindung der Formel (VIII)

$X$-Ar-$S(O)_m$-Y (VIII),

in welcher

- m für die Zahl 2,
- X für Halogen wie Chlor oder Brom,
- Y für -OR, -OM oder -$NR_2$, wobei R die bei Formeln (II), (III) und (IV) angegebene Bedeutung hat, steht,
- M für Wasserstoff, ein Alkalimetall, ein Erdalkalimetall • 1/2, ein Metall der Hauptgruppe III • 1/3 steht und
- Ar und R die bei Formel (I) gegebene Bedeutung haben,

und

c) 0 bis 5 Mol-%, bezogen auf die Summe der Dihalogenaromaten der Formel (V), (VI) und/oder (VII), eines Tri- oder Tetrahalogenaromaten der Formel (IX),

$Ar^1X_n$ (IX),

wobei

- $Ar^1$ für einen aromatischen oder heterocyclischen $C_6$-$C_{24}$-Rest steht,
- X für Halogen wie Brom oder Chlor steht und
- n für die Zahlen 3 oder 4 steht,

und

d) als Schwefelspender 50 bis 100 Mol-% Natrium- oder Kaliumsulfid und 0 bis 50 Mol-% Natrium- oder Kaliumhydrogensulfid, wobei das molare Verhältnis von (a + b + c) : d im Bereich von 0,75 : 1 bis 1,15 : 1 liegt,

e) in einem organischen Lösungsmittel, gegebenenfalls unter Mitverwendung von Katalysatoren und/oder Cosolventien, wobei das molare Verhältnis von d) zu dem organischen Lösungsmittel im Bereich von 1 : 2 bis 1 : 15 liegt,

miteinander umgesetzt werden und die Umsetzung durch Vermischen von wasserhaltigen Alkalisulfid- und/oder Alkalihydrogensulfid-Lösungenmit Lösungen der Halogenaromaten in einem organischen Lösungsmittel bei Temperaturen oberhalb 212 °C erfolgt.

Beispiele für einsetzbare Dihalogenaromaten der Formel (V) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom2-ethylbenzol, 1,4-Dichlor-2,3,5,6-tetramethylbenzol, 1,4-Dichlor-2-cyclohexylbenzol, 2-Benzyl-1,4-dichlorbenzol, 2,4-Dichlortoluol, 2,4-Dichlorxylol, 2,4-Dichlorcumol.

Bevorzugt sind 1,4-Dichlorbenzol, 1,3-Dichlorbenzol und 2,5-Dichlortoluol.

Beispiele für einsetzbare Dihalogenaromaten der Formel (VI) sind 4,4'-Dichlordiphenyl, 4,4'-Dibromdiphenyl, 4,4'-Dichlorbenzophenon, 3,3'-Dichlorbenzophenon, 4,4'-Dichlordiphenylsulfon, 1,4-Bis-(4'-chlorbenzoyl)-benzol, 1,4-Bis-(3'-chlorbenzoyl)-benzol.

Bevorzugt sind 4,4'-Dichlordiphenyl, 4,4'-Dichlordiphenylsulfon und 4,4'-Dichlorbenzophenon.

Beispiele für einsetzbare Dihalogenaromaten der Formel (VII) sind 1,4-Dichlornaphthalin, 1,4-Dibromnaphthalin, 1,5-Dichlornaphthalin, 2,6-Dichlornaphthalin, 2,6-Dibromnaphthalin, 2,7-Dichlornaphthalin, 2,7-Dibromnaphthalin, 1,8-Dichlornaphthalin und 1,8-Dibromnaphthalin.

Die Dihalogenaromaten der Formeln (V), (VI) und/oder (VII) sind allein oder im Gemisch miteinander einsetzbar.

Beispiele für einsetzbare Verbindungen der Formel (VIII) sind 2-Chlorbenzolsulfonsäure, 3-Chlorbenzolsulfonsäure, 4-Chlorbenzolsulfonsäure, 4-(4-Chlorphenyl)-benzolsulfonsäure, 4-(3-Chlorphenyl)-benzolsulfonsäure, 3-(4-Chlorphenyl)-benzolsulfonsäure, 3-(3-Chlorphenyl)-benzolsulfonsäure, 5-Chlor-2-methyl-benzolsulfonsäure, 3-Chlor-4-methylbenzolsulfonsäure, 1-Chlor-2-naphthalinsulfonsäure, 4-Chlor-2-naphthalinsulfonsäure, 4-Chlor-1-naphthalinsulfonsäure, 5-Chlor-1-naphthalinsulfonsäure, 5-Chlor-2-naphthalinsulfonsäure, 8-Chlor-2-naphthalinsulfonsäure, 8-Chlor-1-naphthalinsulfonsäure, 2-Chlor-1-naphthalinsulfonsäure, 3-Chlor-1-naphthalinsulfonsäure, 6-Chlor-1-naphthalinsulfonsäure, 6-Chlor-2-naphthalinsulfonsäure, 7-Chlor-2-naphthalinsulfonsäure, 7-Chlor-1-naphthalinsulfonsäure, die entsprechenden Bromverbindungen. Es können auch Salze (z.B. M = Alkali, Erdalkali, Metall der 3. Hauptgruppe) Ester oder Amide der genannten Verbindungen eingesetzt werden.

Beispiele für einsetzbare Tri- oder Tetrahalogenaromaten der Formel (IX) sind 1,2,4-Trichlorbenzol, 1,3,5-Trichlorbenzol, 2,2',4,4'-Tetrachlordiphenyl, 2,2',4,4'-Tetrachlordiphenylsulfid, 1,3,5-Trichlortriazin, 1,2,6-Trichlornaphthalin und Tris-(4-Chlorphenyl)-benzol.

Als Schwefelspender können z. B. Alkalisulfide in üblichen Mengen und in üblicher Weise eingesetzt werden, z.B. Natrium- oder Kaliumsulfid. Es können Sulfide eingesetzt werden, die aus den Hydrogensulfiden z.B. mit Natrium- oder Kaliumhydroxid hergestellt werden. Sie enthalten 1 bis 9 Mol Wasser pro Mol Sulfid und können als Schmelze, gegebenenfalls gemeinsam mit Katalysatoren, eingesetzt werden.

Als Alkalihydrogensulfide sind z.B. Natrium- oder Kaliumhydrogensulfide geeignet. Sie können aus Hydroxiden und Schwefelwasserstoff hergestellt werden. Ebenso ist es möglich, sie aus Sulfiden mit Schwefelwasserstoff herzustellen. Sie können 1 bis 4 Mol Wasser enthalten.

Geeignete organische Lösungsmittel sind aprotische Lösungsmittel, insbesondere N-$C_1$-$C_{10}$-alkylierte Lactame wie beispielsweise N-Methylpyrrolidon, N-Ethylpyrrolidon, N-Methylpiperidon, N-Isopropylpyrrolidon, N-Methylcaprolactam oder disubstituierte cyclische Harnstoffe wie beispielsweise N,N'-Dimethylpyrimidazolidinon und N,N'-Dimethylimidazolidinon.

Der Siedepunkt der Lösungsmittel sollte bei 212 °C bis 280 °C liegen. Zur Erreichung des genannten Temperaturbereiches kann die Reaktion unter leichtem Überdruck (bis ca. $10^3$ bar) durchgeführt werden.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1 Mol, bezogen auf 1 Mol Natrium- oder Kaliumsulfid, eingesetzt werden, z. B. N,N-Dimethylacetamid, N,N-Diethylacetamid, N,N-Dimethylpropionamid.

Als Katalysatoren können für diesen Zweck übliche Substanzen in üblichen Mengen eingesetzt werden, beispielsweise Alkalisalze, z.B. Natrium- oder Kalium-fluoride, -phosphate, -carboxylate oder -capronate in Mengen von 0,02 bis 1,0 Mol Katalysator pro Mol S-Spender.

Die Umsetzung kann so durchgeführt werden, daß das Lösungsmittel, die Halogenaromaten der Formel (V), (VI), (VII), (VIII) und/ oder (IX), gegebenenfalls mit den Katalysatoren und/oder Cosolventien sowie die wasserhaltigen Hydrogensulfide und/oder Sulfide gleichzeitig oder nacheinander der Reaktionsmischung zugeführt werden. Hierbei beträgt die Temperatur des Reaktionsgemisches mindestens 212 °C. Die Entwässerung erfolgt spontan unter Rückführung der azeotrop abdestillierenden Halogenaromaten. Der Wassergehalt des Reaktionsgemisches beträgt bis zu 0,02 Gew.-%.

Die Reaktionszeit kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen. Nicht umgesetzte Halogenaromaten können am Ende der Reaktion aus dem Reaktionsgemisch beispielsweise destillativ abgetrennt werden.

Die Isolierung der Polyarylensulfide erfolgt beispielsweise durch Abkühlen, Filtern und Waschen des Reaktionsgemisches zunächst mit Ketonen wie Aceton oder Alkoholen wie Methanol, Ethanol oder Isopropanol. Der verbleibende Rückstand wird in Wasser im Verhältnis 1 Tl. Rückstand zu 5 bis 20 Tle. Wasser suspendiert. Die erhaltene Suspension wird mit Säuren wie Essigsäure, Salzsäure, Phosphorsäure, Schwefelsäure usw. auf pH = 1 bis 5 gestellt und anschließend mit Wasser neutral gewaschen. Die so erhaltenen Polyarylensulfide sind praktisch elektrolytfrei.

Die Polymeren und/oder Oligomeren haben Molekulargewichte $M_n$ von 500 bis 100.000.

Die Bestimmung der Molekulargewichte der erfindungsgemäßen Oligo- und Polyphenylensulfide erfolgt beispielsweise über eine chromatographische Methode (z. B. EP-A 171 021).

Die hergestellten funktionellen Oligo- bzw. Polyarylensulfide können mit anderen anorganischen oder organischen Oligomeren oder Polymeren, gegebenenfalls in Gegenwart von Pigmenten, Füllstoffen und anderen Zusatzstoffen versetzt werden.

Die Oligo- und Polyarylensulfide, vorzugsweise Polyphenylensulfide mit Sulfonsäure- und/oder Sulfonsäure-Endgruppen können durch Aufschmelzen, gegebenenfalls unter Zusatz von anderer Polymerer, vorzugsweise anderer Polyarylensulfide wie Polyphenylensulfid zur Herstellung neuer Polymerer verwendet werden.

Gegenstand der Erfindung sind Mischungen aus Oligo- und Polyarylensulfide, vorzugsweise Oligo- und Polyphenylensulfide mit Sulfonsäure- und/oder Sulfonsäurederivat-Eendgruppen aus

a) 50 bis 100 Gew.-%, vorzugsweise 75 bis 100 Gew.-% Polymeren der Formel (I)

$Y\text{-}(O)_mS\text{-}[Ar\text{-}S]_n\text{-}Ar\text{-}X$ (I),

in welcher

- Y für -OR, -OM oder $-NH_2$, in welchen R die bei Formeln (II), (III) oder (IV) angegebene Bedeutung hat, steht,
- n für eine ganze Zahl > 2, bevorzugt > 2, < 100,
- m für die Zahl 2,
- M für H, ein Alkalimetall, ein Erdalkalimetall • 1/2, ein Metall der Hauptgruppe III • 1/3,
- X für Halogen-, Mercapto-, Mercaptid, einen weiteren $-S(O)_m-Y$-Rest,
- Ar gleiche oder verschiedene Reste der Formeln (II), (III) und/oder (IV) steht,

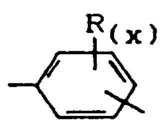

(II),

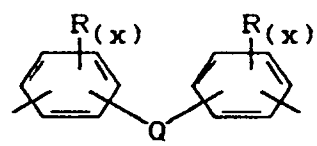

(III),

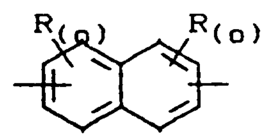

(IV),

in denen

- R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Arylalkyl sein können, wobei zwei zueinander ortho-ständige Reste R zu einem aromatischen oder heterocyclischen Ring, N, O oder S als Heteroatom enthaltend, verknüpft sein können,
- Q für eine Einfachbindung oder zweibindige Gruppen wie $-Ar^1-$, -O-, -S-, -SO-, $-(CR_2)_p-$,-CO-, $-CO-Ar^1-CO-$ steht, wobei R die oben angegebene Bedeutung hat, $Ar^1$ einen zweibindigen $C_6$-$C_{24}$-Aromaten bedeutet und p für eine ganze Zahl von 1 bis 24 steht,
- n für die Zahl 1, 2, 3 oder 4 steht,
- o für die Zahl 1, 2 oder 3 steht

und

b) 0,1 bis 50 Gew.-%, vorzugsweise 0,5 bis 25 Gew.-%. verzweigte Polyarylensulfiden der Formel (X)

-Ar-S- (X),

in welcher

- Ar die bei Formel (I) angegebene Bedeutung hat, welche

miteinander aufgeschmolzen werden und

c) 0 bis 250 Teile übliche Verstärkungs-, Füll- und/oder Hilfsstoffe enthalten.

Die Nachbehandlungszeit in der Schmelze beträgt 0,5 bis 500 Minuten, vorzugsweise 10 bis 100 Minuten.

Die geeignete Temperatur zur Nachbehandlung in der Schmelze beträgt 280 °C bis 450 °C, vorzugsweise 300 °C bis 360 °C. In einer besonderen Ausführung können auch durch Reaktion in fester Phase Formkörper aus den erfindungsgemäßen Polyarylensulfiden bei Temperaturen oberhalb 150 °C thermisch nachbehandelt werden.

Erfindungsgemäß einsetzbare Polyarylensulfide (PAS), vorzugsweise Polyphenylensulfide (PPS) sind bekannt (z.B. US-A 33 54 129, EP-A 166 368, EP-A 171 021) und handelsüblich.

Das Verfahren kann unter Inertgasen (z.B. Stickstoff, Edelgase wie Argon), im Vakuum oder an der Luft durchgeführt werden in dazu geeigneten Apparaturen, z.B. Knetern (Schneckenwellen), Extrudern usw.

Ein weiterer Gegenstand der Erfindung ist die Verwendung der erfindungsgemäß hergestellten neuen Polyarylensulfide Mischungen, gegebenenfalls in Kombination mit üblichen Verstärkungs-, Füll-und/oder Hilfsstoffen als geformte Körper.

Geformte Körper im Sinne der Erfindung können Extrudate wie Fasern, Folien, Profile, Rohre etc., Spritzgrußteile und/oder Verbundwerkstoffe sein.

Zur Kalibrierung des Molekulargewichtes wurde die Schmelzviskosität $\eta$m der Polymerschmelze (in Pa.s) bei 360 °C in Abhängigkeit von der Schubspannung (in Pa) mit Hilfe des Instron-Rotationsviskosimeters bestimmt,

Man kann auf diese Weise die Schmelzviskosität in einem sehr weiten Bereich von $10^{-1}$ bis $10^{7}$ Pa.s bestimmen. In dem Instron-Rheometer wird das Polymer zwischen einer festen Platte und einem drehbaren Kegel geschmolzen und das Drehmoment des Kegels bestimmt.

Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron, Durchmesser des Kegels und der Platte 2 cm. Angegeben wird die Schmelzviskosität, die bei einer Schubspannung von $\tau = 10^{2}$ Pa gemessen wird,

Die erfindungsgemäßen Polymermischungen können direkt durch Extrusion, Extrusionsblasen, Spritzgießen oder sonst üblichen Verarbeitungstechniken zu Folien, Formkörpern, Halbzeugen oder Fasern verarbeitet werden, Diese können in üblicher Weise Verwendung finden, z. B. als Automobilteile, Armaturen, Ventile, Kugellagerteile, Elektroteile wie z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen, Fernmeldeeinrichtungen sowie Haushaltsgeräten. Bevorzugt ist die Verwendung der erfindungsgemäßen Polymeren bzw. Polymermischungen im Elektro/Elektronik-Bereich.

Die Mischungen der Erfindung sind hochkristalline, schnellkristallisierende, thermoplastische Massen aus Mischungen spezieller Polyarylensulfide. Sie können als Rohstoffe für die Herstellung von Fasern, Folien und Formkörpern verwendet werden.

Aufgrund ihrer teilkristallinen Struktur besitzen sie hervorragende Eigenschaften, z.B. hohe Verschleißfestigkeit, günstiges Zeitstandverhalten und hohe Maßgenauigkeit. Sie sind für die Herstellung mechanisch und thermisch stark beanspruchter Teile gut geeignet.

Eine zusätzliche Verbesserung der mechanischen Eigenschaften läßt sich durch Einarbeitung von Verstärkungsmaterialien, z.B. Glasfasern erzielen.

Die Herstellung von Formkörpern aus Polyarylensulfid (PAS) durch Spritzguß ist erschwert, da hohe Formtemperaturen (> 130 °C) und relativ lange Preßzeiten notwendig sind. Werkzeugtemperaturen > 130 °C können problematisch sein, da die Werkzeuge im Normalfall für eine Temperatur um 100 °C (Heizmittel Wasser) ausgelegt sind. Werkzeugeinrichtungen, die mit anderen Heizmitteln, z.B. Öl betrieben werden und Temperaturen > 110 °C erzielen, sind im allgemeinen selten und ihr Gebrauch ist unwirtschaftlich. Sehr häufig werden damit in der Praxis die gewünschten Temperaturen nicht erzielt und die Temperaturverteilung ist ungleichmäßig. Wegen dieser Nachteile ist es wirtschaftlich unattraktiv, solch hohe Werkzeugtemperaturen im Spritzgußbereich anzuwenden.

Weiterhin ist es wünschenswert, hohe Kristallinität möglichst rasch zu erreichen, um ein optimales Eigenschaftsniveau zu erhalten. Hohe Kristallinität gewährleistet Härte, Dimensionsstabilität und Formstabilität, auch bei höheren Temperaturen. Außerdem hängt von der Formstandzeit die Dauer des Spritzzyklus ab, welche die Wirtschaftlichkeit mitbestimmt.

Diese Zyklen sind selbst bei den hohen Werkzeugtemperaturen für die Verarbeitung des Polyarylensulfids relativ lang und erschweren das Vordringen von Polyarylensulfid bei der Herstellung von Spritzgußformkörpern.

Es ist bekannt, daß bestimmte Zusätze, z.B. nichtoxidierende Säuren oder deren Salze (z.B. EP-A 259 188, EP-A 260 871), aromatische Carbonsäuren (EP-A 193 951), oligomere Ester (EP-A 212 478), Sulfonsäureester (EP-A 218 946), bestimmte Carbonsäureester (EP-A 236 835), Thioether (EP-A 236 834) oder Phosphorsäureester (EP-A 236 836) die Kristallisationsgeschwindigkeit von Polyarylensulfidformmassen erhöhen. Die Zusätze beeinflussen aber das Eigenschaftsprofil der Formmassen. So können beispielsweise niedermolekulare Verbindungen ausschwitzen bzw. ausdampfen, die Wärmeformbeständigkeit, Unverträglichkeit der Zusätze mit anderen Hilfsstoffen, erhöhter Elektrolytgehalt (z.B. bei Anwendungen im Elektro/Elektroniksektor) o.ä. können störend sein.

Polyarylensulfide zeigen eine höhere Kristallinität und höhere Kristallisationsgeschwindigkeit, ohne daß die o.g. Nachteile auftreten, wenn sie 0,1 bis 50 Teile, bevorzugt 0,5 bis 25 Teile, bezogen auf 100 Teile Gesamtmenge Harz neuen Oligo- oder Polyarylensulfids, vorzugsweise Polyphenylensulfids der Formel (I) mit mindestens einer Sulfonsäure- bzw. SulfonsäurederivatEndgruppe enthalten. Dies ermöglicht es, den für die hohe Formstabilität erforderlichen Kristallinitätsgrad schneller zu erreichen und damit die Polyphenylensulfidmassen mit stark verkürzten Spritzzyklen zu verarbeiten.

Ein weiterer Vorteil der erfindungsgemäßen Polyarylensulfidmassen besteht in der Absenkung der Formtemperatur, ohne daß das gute Kristallisationsverhalten beeinträchtigt wird. Die Spritzgußmasse kühlt schneller ab, wodurch die Formstandzeit weiter abgekürzt wird.

Die Mischung aus Polyarylensulfiden der Formel (I) mit Polyarylensulfiden der Formel (IV) gegebenenfalls in Mischung mit üblichen Verstärkungs-, Füll- und/oder Hilfsstoffen werden in der Schmelze, beispielsweise in Schneckenwellen, Extrudern oder Knetern oder anderen dazu geeigneten Vorrichtungen, hergestellt.

Die Nachbehandlungszeit in der Schmelze beträgt 0,1 bis 500 Minuten, bevorzugt 10 bis 100 Minuten.

Die geeignete Temperatur zur erfindungsgemäßen Nachbehandlung in der Schmelze beträgt 280 °C bis 450 °C, vorzugsweise 300 °C bis 360 °C.

Es können auch durch Reaktion in fester Phase Formkörper aus den erfindungsgemäßen Polyarylensulfidgemischen bei Temperaturen oberhalb von 150 °C thermisch nachbehandelt werden.

Das erfindungsgemäße Verfahren kann unter Inertgasen wie Stickstoff oder Argon, im Vakuum oder an der Luft durchgeführt werden.

Ein weiterer Gegenstand der Erfindung ist die Verwendung der erfindungsgemäßen Polyarylensulfidmischungen zur Herstellung geformter Körper, z.B. Extrudaten wie Fasern, Folien, Profilen, Rohren usw., Spritzgußteilen und/oder Verbundwerkstoffen.

Als Maß für die Kristallisationsgeschwindigkeit der Proben werden in DSC-Apparaturen isotherme Kristallisationsgeschwindigkeit ($t_{1/2}$; Zeit bis zum Maximum des Energieflusses bei bestimmten Temperaturen), die Temperatur der dynamisch gemessenen Kristallisation $T_{krist.}$; Wert im Maximum; Kühlrate 10 K/min) und der zugehörige Energiegehalt ($\Delta H_{krist.}$) bestimmt. Die Proben werden jeweils vorher 10 min bei 330 °C gehalten. Die Kristallisationswerte bei 110 °C werden an amorphen Probenmaterialien erhalten, die nach der Schmelzbehandlung durch Abschrecken mit flüssigen Stickstoff hergestellt werden können.

Zur Abschätzung der thermischen Stabilität der Proben (Zersetzung, Ausdampfung) werden TGA-Bestimmungen (Thermogravimetrie) durchgeführt. Dazu wurden ca. 10 mg Probe unter Stickstoffatmosphäre in einer Perkin-Elmer TGS 2-Apparatur mit einer Rate von 20 K/min aufgeheizt und der jeweilige Gewichtsverlust bei 300 °C, 350 °C und 400 °C bestimmt.

Die erfindungsgemäßen Polymermischungen können mit 0 bis 250 Gew.-%, bezogen auf Polymere, mit üblichen Füll- und Verstärkungs- und/oder Hilfsstoffen abgemischt werden. Z.B. können Glasfasern, Talk, Glimmer, andere anorganische Füllstoffe, z.B. Carbonate, Quarz, Kohlenstoff, Nukleierungsmittel, Pigmente usw. zugegeben werden. Eine vollständigere Liste möglicher Additive und/oder Füllstoffe und/oder Verstärkungsstoffe ist in Modern Plastic Encyclopedia 1988, Vol. 64, No. 10 A, S. 127-194 enthalten.

Die Zugabe der Füllstoffe kann vor oder während der Herstellung der Mischung bei beliebigen Temperaturen erfolgen.

Die erfindungsgemäßen Polymermischungen können direkt durch Extrusion, Extrusionsblasen, Spritzgießen oder sonst üblichen Verarbeitungstechniken zu Folien, Formkörpern, Halbzeugen oder Fasern verarbeitet werden. Diese können in üblicher Weise Verwendung finden, z. B. als Automobilteile, Armaturen, Ventile, Kugellagerteile, Elektroteile wie z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen, Fernmeldeeinrichtungen sowie Haushaltsgeräten. Bevorzugt ist die Verwendung der erfindungsgemäßen Polymeren bzw. Polymermischugnen im Elektro/Elektronik-Bereich.

Beispiel 1

Herstellung von Polyarylensulfid mit Sulfonsäure-Endgruppen

Zu 2100 g N-Methylcaprolactam, 940,8 g p-Dichlorbenzol und 27,5 g p-Chlorbenzolsulfonsäure als Na-Salz wurden 756,75 g Natriumsulfid-Hydrat (ca. 60prozentig), 135 g Natronlauge und 108 g Caprolactam bei einer Temperatur von 215 °C zudosiert. Die Zudosierrate richtet sich nach dem Umsatz und wird so eingestellt, daß die Temperatur von 215 °C bei gleichzeitiger zusätzlicher Beheizung des Reaktionsgefäßes eingehalten werden kann. Bei der Dosierung wird gleichzeitg das Wasser aus der Reaktion entfernt. Nach Dosierung hält man die Reaktion auf Rückfluß. Nach weiteren 9 Stunden Reaktionszeit wird das PPS in Isopropanol ausgefällt, in Wasser angesäuert und elektrolytfrei gewaschen und in einem Vakuumtrockenschrank getrocknet.

Beispiele 2 bis 6

Mischungen aus einem Polyphenylensulfid ($\eta$m = 8 Pa.s) und dem Produkt aus Beispiel 1 wurden 10 Minuten bei 340 °C in einer $N_2$-Atmosphäre geknetet. Die erhaltenen Proben werden auf ihre Schmelzviskosität untersucht.

Tabelle 1

| | Bsp. 1 | PPS | in Pa.s | |
|---|---|---|---|---|
| | | | $\eta$m vorher | $\eta$m nachher |
| Bsp. 2 | - | 100 | 8 | 8 |
| Bsp. 3 | 50 | 50 | n.b. | 12 |
| Bsp. 5 | 75 | 25 | n.b. | 250 |
| Bsp. 6 | 100 | - | ca. 20 | 3000 |

Beispiel 7

Herstellung von Polyarylensulfid mit Sulfonsäure-Endgruppen: Zu 2.700 g N-Methylcaprolactam, 1.192,5 g p-Dichlorbenzol und 89,3 g p-Chlorbenzolsulfonsäure als Na-Salz wurden
1.134,4 g Natriumsulfid-Hydrat (ca. 60 %ig),
6,7 g Natriumhydroxid,
325,0 g Wasser und
141,2 g Caprolactam
bei einer Temperatur von 215 °C zudosiert.

Die Zudosierrate richtet sich nach dem Umsatz und wird so eingestellt, daß die Temperatur von 215 °C bei gleichzeitiger zusätzlicher Beheizung des Reaktionsgefäßes eingehalten werden kann. Bei der Dosierung wird gleichzeitig das Wasser aus der Reaktion entfernt. Nach Dosierung hält man die Reaktion auf Rückfluß. Nach weiteren 9 Stunden Reaktionszeit wird das PPS in Isopropanol ausgefällt, in Wasser angesäuert und elektrolytfrei gewaschen und in einem Vakuumtrockenschrank getrocknet.

Beispiel 8

Herstellung von Polyarylensulfid mit Sulfonsäure-Endgruppen: Zu 2.700,0 g N-Methylcaprolactam, 1.100,8 g p-Dichlorbenzol und 357,1 g p-Chlorbenzolsulfonsäure als Na-Salz wurden
1.134,4 g Natriumsulfid-Hydrat (ca. 60 %ig),
6,7 g Natriumhydroxid,
325,0 g Wasser und
141,2 g Caprolactam
bei einer Temperatur von 215 °C zudosiert.
fluß. Nach weiteren 9 Stunden Reaktionszeit wird das PPS in Isopropanol ausgefällt, in Wasser angesäuert und elektrolytfrei gewaschen und in einem Vakuumtrockenschrank getrocknet.

Die Zudosierrate richtet sich nach dem Umsatz und wird so eingestellt, daß die Temperatur von 215 °C bei gleichzeitiger zusätzlicher Beheizung des Reaktionsgefäßes eingehalten werden kann. Bei der Dosierung wird gleichzeitig das Wasser aus der Reaktion entfernt. Nach Dosierung hält man die Reaktion auf Rückfluß. Nach weiteren 9 Stunden Reaktionszeit wird das PPS in Isopropanol ausgefällt, in Wasser angesäuert und elektrolytfrei gewaschen und in einem Vakuumtrockenschrank getrocknet.

Beispiele 9 bis 14

Mischungen aus einem Polyphenylensulfid ($\eta m$ = 8 Pa.s) und dem Material von Beispiel 1 wurden 10 Minuten bei 340 °C in einer $N_2$-Atmosphäre geknetet. Die erhaltenen Proben wurden auf ihre Schmelzviskositäten und ihre Kristallisationseigenschaften untersucht.

Tabelle 2

| Beispiel | % PPS (8 Pa.s) | % Prod. aus Bsp.1 | $\eta_m$ | $T_{krist.}$ (°C) | $\Delta H_{krist.}$ (J/g) | $t_{1/2}$ (110°C) | $t_{1/2}$ (240°C) | Bemerkung |
|---|---|---|---|---|---|---|---|---|
| 9 | 100 | - | 8 | 222 | 52 | 3,4 | 1,0 | Standard |
| 10 | 99 | 1 | 11 | 250 | 56 | 0,5 | $<$ 0,2 | Erf. |
| 11 | 98 | 2 | 10 | 253 | 60 | 0,2 | $<$ 0,2 | " |
| 12 | 95 | 5 | 9 | 254 | 61 | 0,15 | $<$ 0,2 | " |
| 13 | 90 | 10 | 12 | 252 | 61 | 0,15 | $<$ 0,2 | " |
| 14 | 50 | 50 | 14 | 252 | 59 | 0,2 | $<$ 0,2 | " |

Beispiele 15, 16, 17

Herstellung von Formmassen

Weitere Komponenten:
GF: geschlichtete 6-mm-Glasfaser mit einem Faserdurchmesser von ca. 10 µm
T: Mikrotalk
Die Formmassen wurden durch Mischen und Homogenisieren der Komponenten in der Schmelze bei ca. 300 bis 320 °C Massetemperatur auf einer Zweiwellenschnecke ZSK 32 (Werner & Pfleiderer) hergestellt und anschließend auf ihre Kristallisationseigenschaften untersucht.

Tabelle 3

| Beispiel | % PPS (50 Pa.s) | % GF | % T | Prod. aus Bsp. 1 | $T_{krist.}$ (°C) | $t_{1/2}$ (110°C) Min. | $t_{1/2}$ (240°C) Min. | Bemerkung |
|---|---|---|---|---|---|---|---|---|
| 15 | 52 | 45 | 3 | - | 229 | 4 | 0,9 | Vergl. |
| 16 | 52 | 45 | - | 3 | 237 | 0,2 | 0,2 | Erf. |
| 17 | 49 | 48 | - | 3 | 242 | 0,3 | 0,2 | Erf. |

Beispiele 18 - 22

Mischungen aus einem Polyphenylensulfid ($\eta m$ = 8 Pa.s) und verschiedenen Zuschlägen wurden 10 Minuten bei 340 °C in einer $N_2$-Atmosphäre geknetet. Die erhaltenen Proben wurden durch eine TGA-Messung auf ihre Stabilität hin untersucht.

Tabelle 4

| Beispiel | % PPS (8 Pa.s) | Zuschlag | %-Zuschlag | TGA %-Gewichtsverlust bei 300° C | 350° C | 400° C | Bemerkung |
|---|---|---|---|---|---|---|---|
| 18 | 90 | Bsp. 1 | 10 | 0,2 | 0,3 | 0,4 | Erf. |
| 19 | 90 | * | 10 | 2,3 | 2,9 | 5,0 | Vergl. zu EP-A 218 946 |
| 20 | 90 | ** | 10 | 3,7 | 4,5 | 7,3 | Vergl. zu EP-A 236 835 |
| 21 | 90 | *** | 10 | 1,0 | 1,5 | 5,5 | Vergl. zu EP EP-A 212 478 |
| 22 | 100 | - | - | 0,2 | 0,3 | 0,4 | Standard |

*) Paraffinsulfonsäurephenylester ($C_{12}$-$C_{18}$)

**) Adipinsäuredioctylester

***) Adipinsäurepolyester aus 1,3-Butandiol und 1,6-Hexandiol

## Patentansprüche

1. Hochkristalline, schnell kristallisierende thermoplastische Massen, bestehend aus:
   a) 0,1 bis 50 Teile, bevorzugt 0,5 bis 25 Teile, Polyarylensulfiden der Formel (I),

$$Y\text{-}(O)_mS\text{-}[Ar\text{-}S]_n\text{-}Ar\text{-}X \qquad (I),$$

   und in welcher
   - Y für -OR, -OM oder $-NR_2$, wobei R die bei Formeln (II), (III) und (IV) angegebene Bedeutung hat, steht,
   - n für eine ganze Zahl $\geqq 2$, bevorzugt $\geqq 2 \leqq 100$,
   - m für die Zahl 2,
   - M für H, ein Alkalimetall, ein Erdalkalimetall • 1/2, ein Metall der Hauptgruppe III • 1/3,
   - X für Halogen-, Mercapto-, Mercaptid oder einen weiteren $-S(O)_m$-Y-Rest steht,
   - Ar für gleiche oder verschiedene Reste der Formeln (II), (III) und/oder (IV) steht,

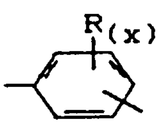
(II),

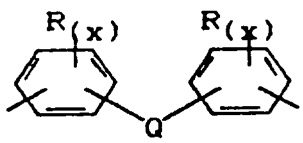
(III),

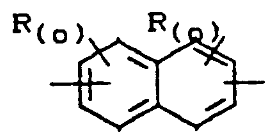
(IV),

   in denen
   - R gleich oder verschieden sind und Wasserstoff $C_1$-$C_{20}$-Alkyl, $C_4$-$C_{20}$-Cycloalkyl, $C_6$-$C_{24}$-Aryl, $C_7$-$C_{24}$-Arylalkyl sein können, wobei zwei zueinander ortho-ständige Reste R zu einem aromatischen oder heterocyclischen Ring mit N, O oder S als Heteroatomen verknüpft sein können,

   und
   - Q für eine Einfachbindung oder zweibindige Gruppen wie -Ar[1]'-, -O-, -S-, -SO-, $-SO_2-$, $-(CR_2)$-p-, -CO-, -CO-Ar[1]-CO- steht, wobei R die oben angegebene Bedeutung hat, Ar[1] einen zweibindigen $C_6$-$C_{24}$-Aromaten bedeutet und p eine ganze Zahl von 1 bis 24 darstellt, und
   - x für die Zahl 1, 2, 3 oder 4 steht und
   - o für die Zahl 1, 2 oder 3 steht,

   b) 50 bis 99,9 Teile, bevorzugt 75 bis 99,5 Teile, gegebenenfalls verzweigten Polyarylensulfiden der Formel (X)

   -Ar-S- (X),

   in welcher Ar die bei Formel (I) angegebene Bedeutung hat, welche miteinander aufgeschmolzen werden und
   c) 0 bis 250 Teile übliche Verstärkungs-, Füll- und/oder Hilfsstoffe.

2. Verwendung von Polymermischungen nach Anspruch 1 zur Herstellung geformter Körper.

## Claims

1. Highly crystalline, rapidly crystallising thermoplastic compounds consisting of:
   a) 0.1 to 50 parts and preferably 0.5 to 25 parts of polyarylene sulfides corresponding to formula (I):

   $Y\text{-}(O)_mS\text{-}[Ar\text{-}S]_n\text{-}Ar\text{-}X$ (I)

in which

- Y represents -OR, -OM or -$NR_2$, where R is as defined for formulae (II), (III) and (IV),
- n is an integer of ≧ 2, preferably ≧ 2 ≦ 100,
- m is the number 2,
- M represents H, an alkali metal, an alkaline earth metal • 1/2, a metal of main group III • 1/3,
- X represents halogen, mercapto, mercaptide or another -$S(O)_3$M-Y- group,

the Ar's may be the same or different and represent groups corresponding to formulae (II), (III) and/or (IV):

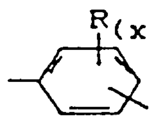
(II),
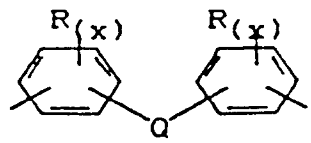
(III),
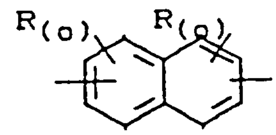
(IV),

in which

the R's may be the same or different and may represent hydrogen, $C_{1-20}$ alkyl, $C_{4-20}$ cycloalkyl, $C_{6-24}$ aryl, $C_{7-24}$ arylalkyl; two substituents R in the ortho position to one another may be attached to form an aromatic or heterocyclic ring containing N, O or S as heteroatoms,

and

- Q is a single bond or groups with two bonds, such as -$Ar^{1'}$-, -O-, -S-, -SO-, -$SO_2$-, -$(CR_2)_p$, -CO-, -Co-$Ar^1$-CO-, where R is as defined above, $Ar^1$ is an aromatic $C_{6-24}$ radical with two bonds and p is an integer of 1 to 24,
- x is the number 1, 2, 3 or 4,
- o is the number 1, 2 or 3,

b) 50 to 99.9 parts and preferably 75 to 99.5 parts of optionally branched polyarylene sulfides corresponding to formula (X):

-Ar-S- (X)

in which Ar is as defined for formula (I),
which are fused together and

c) 0 to 250 parts of typical reinforcing materials, fillers and/or auxiliaries.

**2.** The use of the polymer blends claimed in claim 1 for the production of moulded articles.

## Revendications

**1.** Masses thermoplastiques à haute cristallinité et cristallisant rapidement qui consistent en :

a) 0,1 à 50 parties, de préférence 0,5 à 25 parties, de polysulfures d'arylène de formule (I)

$Y-(O)_mS-[Ar-S]_n-Ar-X$ (I),

dans laquelle

- Y représente -OR, -OM ou -$NR_2$, R ayant les significations indiquées ci-après en référence aux formules (II), (III) et (IV),
- n est un nombre entier supérieur ou égal à 2, de préférence supérieur ou égal à 2 et inférieur ou égal à 100,
- m est égal à 2,
- M représente H, un atome de métal alcalin, 1/2 atome de métal alcalino-terreux, 1/3 d'atome de métal du groupe principal III,
- X représente un halogène, un groupe mercapto, mercaptide ou un autre groupe -$S(O)_m$-Y,

les symboles Ar, ayant de significations identiques ou différentes, représentent des groupes de formule (II), (III) et/ou (IV),

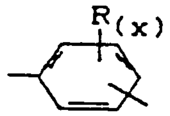

(II),

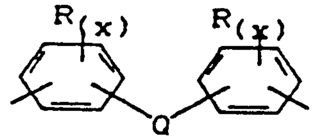

(III),

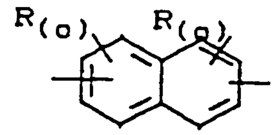

(IV),

dans lesquelles

les symboles R, ayant des significations identiques ou différentes, représentent chacun l'hydrogène, un groupe alkyle en $C_1$-$C_{20}$, cycloalkyle en $C_4$-$C_{20}$, aryle en $C_6$-$C_{24}$, arylalkyle en $C_7$-$C_{24}$, deux groupes R en position mutuelle ortho pouvant être reliés entre eux avec formation d'un noyau aromatique ou hétérocyclique contenant N, O ou S en tant qu'hétéroatomes,

et

Q représente une liaison simple ou un pont divalent tel que $-Ar^{1'}-$, -O, -S-, -SO-, $-SO_2-$, $-(CR_2)_p-$, -CO-, $-CO-Ar^1-CO-$, R ayant les significations indiquées ci-dessus, $Ar^1$ représentant un groupe aromatique divalent en $C_6$-$C_{24}$ et p un nombre entier allant de 1 à 24, et

x est égal à 1, 2, 3 ou 4 et

o est égal à 1, 2 ou 3,

b) 50 à 99,9 parties, de préférence 75 à 99,5 parties, de polysulfures d'arylène éventuellement ramifiés de formule (X)

-Ar-S (X),

dans laquelle Ar a les significations indiquées en référence à la formule (I), qui sont fondus entre eux, et

c) 0 à 250 parties de matières renforçantes, matières de charges et/ou produits auxiliaires usuels.

**2.** Utilisation des mélanges de polymères selon revendication 1 pour la fabrication d'objets moulés.